(19) Europäisches Patentamt
European Patent Office
Office européen des brevets

(11) Veröffentlichungsnummer: **0 350 704**
**A2**

(12) # EUROPÄISCHE PATENTANMELDUNG

(21) Anmeldenummer: 89111644.4

(22) Anmeldetag: 27.06.89

(51) Int. Cl.4: C08G 64/04 , C08J 5/18

(30) Priorität: 09.07.88 DE 3823305

(43) Veröffentlichungstag der Anmeldung:
17.01.90 Patentblatt 90/03

(84) Benannte Vertragsstaaten:
DE FR GB IT

(71) Anmelder: BAYER AG
D-5090 Leverkusen 1 Bayerwerk(DE)

(72) Erfinder: Weymann, Günther, Dr.
Karl-Arnold-Strasse 4
D-5090 Leverkusen(DE)
Erfinder: Grigo, Ulrich, Dr.
Michelsheide 9
D-4152 Kempen 3(DE)
Erfinder: Berg, Klaus D., Dr.
Hansastrasse 124
D-4150 Krefeld(DE)
Erfinder: Mais, Franz-Josef, Dr.
Gustav-Poensgen-Strasse 23
D-4000 Düsseldorf(DE)

(54) **Folien aus 3,3'-Dihydroxydiphenylether-Homopolycarbonaten.**

(57) Gegenstand der vorliegenden Erfindung sind Folien aus 3,3'-Dihydroxydiphenylether-Homopolycarbonaten, ihre Herstellung, Verbundfolien dieser Folien im Verbund mit Folien aus anderen Thermoplasten, die Herstellung dieser Verbundfolien sowie die Verwendung der erfindungsgemäßen Folien einschließlich der erfindungsgemäßen Verbundfolien beispielsweise als Membranen.

EP 0 350 704 A2

# Folien aus 3,3′-Dihydroxydiphenylether-Homopolycarbonaten

Gegenstand der vorliegenden Erfindung sind Folien einer Dicke von 1 µ bis 500 µ, vorzugsweise von 10 µ bis 250 µ aus thermoplastischen Homopolycarbonaten aus 3,3′-Dihydroxydiphenylether.

Thermoplastische Homopolycarbonate aus 3,3′-Dihydroxydiphenylether sind bekannt (s. beispielsweise Journal of Polymer Science, Part A: Polymer Chemistry, Vol. 25, Seiten 3413 - 3422 (1987) und CRD, Corporate Research and Development, Schenectady New York, "Recent Advances in Polycarbonate Photodegradation" by A. Factor, W. V. Ligon, R. J. May and F. H. Greenberg, Dep. of Chemistry, Buffalo State College, Buffalo NY, General Electric).

Folien aus diesen Homopolycarbonaten sind in der Literatur bislang nicht bekannt.

Es hat sich nun gezeigt, daß Folien aus diesen Homopolycarbonaten ausgezeichnete Barriere-Eigenschaften besitzen, und sich somit eignen als Additivfolien für koch-und ofenfeste dichte Verpackungen, als mikrowellenfeste Verpackungen mit geringer Permeation von Luft, als Folien im Verbund mit anderen Folien zur Herstellung von Verpackungen und Plastikflaschen und als Membranen für die selektive Gastrennung.

Polymermembranen, -folien, -substrate und -verbundfolien gewinnen steigende Bedeutung als Membranen in Permeationsanlagen zur selektiven Abtrennung bestimmter Gase bzw. Flüssigkeiten aus Gas- beziehungsweise Flüssigkeitsgemischen, bei der umgekehrten Osmose zur Brack-und Meerwasserentsalzung, bei der Beschichtung, z. B. von Behältnissen für die Verpackungsindustrie. Von entscheidender Bedeutung sind dabei bei guter Festigkeit und Zähigkeit sehr gute Barriere-Eigenschaften.

Wichtig für gute Barriere-Eigenschaften ist bekanntlich die generelle Beobachtung, daß der Transport niedermolekularer Substanzen wie Gase und Flüssigkeiten in solchen Folien oder Membranen von der Art des verwendeten Thermoplasten und der niedermolekularen Substanz abhängt. Gute Barriere-Eigenschaft bedeutet geringe Permeation von Gasen, Flüssigkeiten und anderen niedermolekularen Substanzen durch die Folien, Membranen, Substrate oder Verbundfolien.

Industriell von besonderer Bedeutung ist eine geringe Permeation bei möglichst kleiner Formteil-Dicke. Die Permeation in Kunststoffen setzt sich im wesentlichen aus zwei Faktoren zusammen: Einer von der Packungsdichte des Kunststoffs beeinflußten Größe, der Diffusion, einerseits, und einer von der Art der diffundierenden Substanz abhängigen Größe, der Löslichkeit, andererseits.

Die erfindungsgemäßen Folien entsprechen den Anforderungen in der Technik, indem sie eine gute Festigkeit und insbesondere für Sauerstoff, Stickstoff und Kohlendioxid eine sehr gute Barriere-Eigenschaft haben.

Die Durchlässigkeit von Kunststoff-Folien für Base und Dämpfe ist untersucht (s. beispielsweise "Kolloid-Zeitschrift", Band 167, November/Dezember 1959, Seiten 55 -62). Polycarbonatfolien sind darin einbezogen (s. dazu auch H. Schnell, "Linear Aromatic Polyesters of Carbonic Acid", Industrial and Engineering Chemistry, Vol. 51, No. 2, February 1959, Seiten 157 - 160).

Aus der DE-OS 2 248 818 (Le A 14 667) ist ein spezielles Verfahren zur Herstellung von dünnen, porenfreien Polycarbonatfolien bekannt, wobei dieses Verfahren insbesondere für Polycarbonate aus 2,2-Bis-(3,5-dimethyl-4-hydroxyphenyl)-propan brauchbar ist.

In dem US-Patent 3 822 202 werden Membranen aus speziellen Polyimiden, Polyestern und Polyamiden beschrieben.

Durch eine Wärmebehandlung bei der Herstellung dieser Membranen wird die selektive Durchlässigkeit dieser Membranen für verschiedene Gase verbessert.

Aus dem US-Patent 4 195 157 sind Polycarbonate aus halogenierten Diphenolen bekannt, die verbesserte Flammwidrigkeit mit guten Barriere-Eigenschaften für $H_2O$-Dampf und Gase verbinden.

Aus dem US-Patent 4 304 899 sind Polycarbonate aus alkylierten Diphenolen bekannt, die verbesserte Barriere-Eigenschaften für $H_2O$-Dampf und Gase haben sollen.

Aus der EP-A 0 242 147 sind semipermeable Polycarbonatmembranen bekannt, deren Polycarbonate überwiegend aus tetrahalogenierten Diphenolen hergestellt sind.

Aus der EP-A 0 244 126 sind Membranen aus Polyestercarbonaten bekannt, wobei die Polyestercarbonate solche auf Basis von Tetrabromdiphenolen sind. Die Membranen sind zur Trennung von Gasen geeignet.

Aus dem US-Patent 4 142 021 sind Laminate bekannt, die excellente Barriere-Eigenschaften für Sauerstoff und Wasserdampf haben.

In "Journal of Applied Polymer Science", Vol. 29, Seiten 845 - 852d (1984) wird die Gasdurchlässigkeit von Mischungen aus Bisphenol-A-Polycarbonaten und Copolyestern, die aus 1,4-Cyclohexan-di-methanol und Mischungen von Terephthalsäure mit Isophthalsäure aufgebaut sind, untersucht.

In "Journal of Polymer Science, Part B, Polymer Physics, Vol. 25, Seiten 1999 - 2026, wird die

Gasabsorption und der Transport in substituierten Polycarbonaten untersucht, wobei zum Vergleich Bisphenol-A-Polycarbonat herangezogen wird.

Der Gegenstand der vorliegenden Erfindung ist unseres Erachtens durch den zitierten Stand der Technik weder vorweggenommen noch nahegelegt.

Die relative Viskosität der erfindungsgemäß einzusetzenden, thermoplastischen Homopolycarbonate aus 3,3-Dihydroxydiphenylether liegt zwischen 1,05 bis 1,95, vorzugsweise zwischen 1,10 bis 1,4, besonders bevorzugt zwischen 1,15 und 1,3 (gemessen bei 25° C in $CH_2Cl_2$ und bei einer Konzentration von 0,5 g Polycarbonat in 100 ml $CH_2Cl_2$).

Davon unabhängig werden Gewichtsmittelmolekulargewichte Mw (gemessen durch Gelpermeationschromatographie) von 10.000 bis 300.000, vorzugsweise von 12.000 bis 150.000, und insbesondere von 15.000 bis 120.000 g/mol eingesetzt.

Die Uneinheitlichkeiten

$$\left[ U = \frac{Mw}{Mn} - 1 \right]$$

der erfindungsgemäß einzusetzenden, thermoplastischen Homopolycarbonate aus 3,3′-Dihydroxydiphenylether sollen zwischen 0,3 und 10, vorzugsweise zwischen 0,4 und 8, und insbesondere zwischen 0,8 und 5 liegen. Mn wurde hierbei ebenfalls durch Gelpermeationschromatographie gemessen.

Die erfindungsgemäß einzusetzenden Homopolycarbonate können allein oder als Gemisch eingesetzt werden. Hierbei ist es beispielsweise auch vorteilhaft, Mischungen von relativ niedermolekularen Homopolycarbonaten mit relativen Viskositäten von etwa 1,05 - 1,2, mit höhermolekularen Homopolycarbonaten mit relativen Viskositäten von 1,5 - 2,5 zu vermischen, vorausgesetzt, daß die relativen Viskositäten der Mischungen wiederum zwischen 1,05 und 1,95, vorzugsweise zwischen 1,10 und 1,40, und insbesondere zwischen 1,15 und 1,30, liegen.

Für die Molekulargewichtsbegrenzung der erfindungsgemäß einzusetzenden Homopolycarbonate dienen in bekannter Weise Phenole, also Phenol selbst oder p-tert.-Butylphenol oder p-Isooctylphenol, die beispielsweise bei der Herstellung der Homopolycarbonate aus 3,3′-Dihydroxydiphenylether nach dem bekannten Phasengrenzflächenverfahren in bekannter Weise und in bekannten Mengen eingesetzt werden.

Die Menge an Kettenabbrechern beträgt zwischen 0,3 bis 10 Mol-%, bezogen auf Mole an 3,3′-Dihydroxydiphenylether, je nach gewünschtem Molekulargewicht des herzustellenden Homopolycarbonats aus 3,3′-Dihydroxydiphenylether.

Die Herstellung der erfindungsgemäßen Polycarbonatfolien aus den Homopolycarbonaten aus 3,3′-Dihydroxydiphenylether erfolgt beispielsweise durch Extrusion der Homopolycarbonate oder durch Tiefziehen der Homopolycarbonate oder durch Gießen von Lösungen der Homopolycarbonate in für diese Polycarbonate üblichen Lösungsmitteln wie beispielsweise Methylenchlorid.

Die Folienherstellung via Extrusion erfolgt beispielsweise, indem man das bei Temperaturen zwischen 80° C und 250° C das Folienextrusionsverfahren anwendet und gegebenenfalls nach Abkühlung unterhalb 70° C im Temperaturbereich zwischen Raumtemperatur und 70° C nochmals biaxial verstreckt.

Die Folienherstellung durch Tiefziehen erfolgt beispielsweise dadurch, daß man oberhalb der Glastemperatur des Homopolycarbonats, vorzugsweise zwischen 50 und 150° C Granulatblöcke des Homopolycarbonats durch Rakeln zu Folien tiefzieht.

Die Folienherstellung durch Gießen der Polycarbonatlösungen erfolgt beispielsweise, indem man konzentrierte Lösungen des Homopolycarbonats in einem geeigneten Lösungsmittel auf ebene Oberflächen ausgießt und bei einer Temperaturführung der ebenen Oberflächen zwischen 30° C und 70° C das Lösungsmittel anschließend verdampft. Man kann die konzentrierten Lösungen der Homopolycarbonate auch auf Flüssigkeiten aufbringen, welche eine höhere Dichte als die der konzentrierten Lösungen haben, nicht mit dem verwendeten Lösungsmittel verträglich sind und das Polycarbonat nicht lösen, und nach dem Spreiten die Folien durch Verdampfen des für das Polycarbonat verwendeten Lösungsmittels und gegebenenfalls auch der Flüssigkeit mit höherer Dichte gewinnen.

Gegenstand der vorliegenden Erfindung ist somit auch ein Verfahren zur Herstellung von Folien aus thermoplastischen 3,3′-Dihydroxydiphenylether-Homopolycarbonaten, das dadurch gekennzeichnet ist, daß man das Polycarbonat aus 3,3′-Dihydroxydiphenylether bei Temperaturen zwischen 80° C und 250° C extrudiert und gegebenenfalls nach Abkühlung zwischen Raumtemperatur und 70° C biaxial verstreckt, oder daß man oberhalb der Glastemperatur des Homopolycarbonats Granulatblöcke desselben durch Rakeln zu

Folien tiefzieht, oder daß man konzentrierte Lösungen des 3,3′-Dihydroxydiphenylether-Homopolycarbonats in einem geeigneten Lösungsmittel auf ebene Oberflächen ausgießt und bei einer Temperaturführung der ebenen Oberflächen zwischen 30° C und 70° C das Lösungsmittel anschließend verdampft, oder daß man die konzentrierten Lösungen der Homopolycarbonate auf Flüssigkeiten aufbringt, welche eine höhere Dichte als die der konzentrierten Lösungen haben, nicht mit dem verwendeten Lösungsmittel verträglich sind und das Polycarbonat nicht lösen, und nach dem Spreiten die Folien durch Verdampfen des für das Polycarbonat verwendeten Lösungsmittels und gegebenenfalls auch der Flüssigkeit mit höherer Dichte gewinnt.

Die erfindungsgemäßen Folien können allein oder im Verbund mit Folien aus anderen Thermoplasten verwendet werden. Hierbei soll das Gewicht an den erfindungsgemäßen Folien aus den thermoplastischen Homopolycarbonaten des 3,3′-Bis-(hydroxyphenyl)-ethers in der Verbundfolie zwischen 5 Gew.-% und 90 Gew.-%, vorzugsweise zwischen 15 Gew.-% und 80 Gew.-%, und insbesondere zwischen 25 Gew.-% und 75 Gew.-%, liegen.

Gegenstand der vorliegenden Erfindung sind somit auch Verbundfolien, bestehend aus

a) Folien aus thermoplastischen Homopolycarbonaten aus 3,3′-Bis-(hydroxyphenyl)-ether und

b) Folien aus anderen Thermoplasten als den thermoplastischen Homopolycarbonaten gemäß Komponente a), die dadurch gekennzeichnet sind, daß das Gewichtsverhältnis der Komponenten a) zu b) zwischen 5 Gew.-% zu 95 Gew.-% und 90 Gew.-% zu 10 Gew.-%, vorzugsweise zwischen 15 Gew.-% zu 85 Gew.-% und 80 Gew.-% zu 20 Gew.-%, und insbesondere zwischen 25 Gew.-% zu 75 Gew.-% und 75 Gew.-% zu 25 Gew.-%, liegt.

Derartige Folien haben gleichfalls gute Barriere-Eigenschaften, wobei diese verbunden sind mit anderen Eigenschaften wie zum Beispiel einer hohen Festigkeit und einem guten Fließverhalten.

Die Dicke der Verbundfolien liegt zwischen 10 µ und 1000 µ, vorzugsweise zwischen 15 µ und 800 µ.

Die Dicke der Einzelfolien gemäß Komponenten a) und b) der Verbundfolien liegt zwischen 1 µ und 500 µ, vorzugsweise zwischen 10 µ und 400 µ.

Die Herstellung der Verbundfolien erfolgt, indem man zunächst in bekannter bzw. in der oben beschriebenen Weise in optimaler Temperaturführung die Folien der Einzelkomponenten herstellt. Anschließend bringt man die noch nicht abgekühlten Folien ohne größere Verstreckung auf eine gemeinsame Temperatur, die vorzugsweise zwischen 70° C und 200° C, vorzugsweise zwischen 75° C und 150° C liegt. Die Folien werden dann über Walzen zusammengeführt und kurzzeitig verpreßt. Dabei kann ein Druck zwischen 2 bar und 500 bar angewendet werden. Das Verfahren kann auch mit mehr als einer anderen Folie als der aus 3,3′-Dihydroxydiphenylether-Homopolycarbonat durchgeführt werden, wobei beispielsweise zunächst jeweils die anderen Folien in der bisher bekannten Weise zusammengebracht werden und danach mit der Folie aus thermoplastischem 3,3′-Bis-(hydroxyphenyl)-ether-Homopolycarbonat unter dem oben beschriebenen Druck verpreßt werden.

Gegenstand der vorliegenden Erfindung ist somit auch ein Verfahren zur Herstellung von Verbundfolien, bestehend aus obigen Komponenten a) und b) in den beanspruchten Gewichtsverhältnissen, das dadurch gekennzeichnet ist, daß man 3,3′-Dihydroxydiphenylether-Homopolycarbonat- Folien gemäß Komponente a) bei Temperaturen zwischen 70° C und 200° C, bevorzugt zwischen 75° C und 150° C, mit Folien gemäß Komponente b) zusammenbringt und dann unter einem Druck zwischen 2 bar und 500 bar, bevorzugt zwischen 5 und 300 bar, verpreßt.

Andere Thermoplasten im Sinne dieser Erfindung sind andere thermoplastische Polycarbonate auf Basis von Diphenolen der Formel (I)

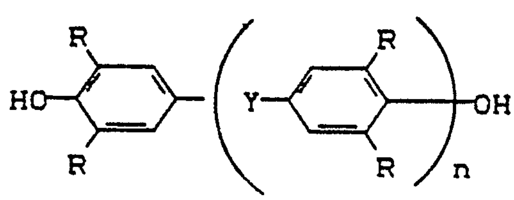

(I)

worin

n 0 oder 1 ist und worin

Y eine Einfachbindung, einen Alkylen- oder Alkylidenrest mit 1 bis 7 C-Atomen, einen Cycloalkylen- oder Cycloalkylidenrest mit 5 bis 12 C-Atomen, -O-, -S-, $-\underset{\underset{O}{\|}}{S}-$,

$-SO_2-$ oder $-\underset{\underset{O}{\|}}{C}-$

bedeutet, und

R H oder $CH_3$ ist.

Derartige thermoplastische Polycarbonate sind literaturbekannt oder nach literaturbekannten Verfahren herstellbar. Entsprechende gilt für die Diphenole der Formel (I).

Beispiele für Diphenole sind:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone und
$\alpha,\alpha'$-Bis-(hydroxyphenyl)-diisopropylbenzole,
sowie deren kernmethylierte Verbindungen.

Bevorzugte Diphenole der Formel (I) sind 2,2-Bis-(4-hydroxyphenyl)-propan (Bisphenol A), 2,2-Bis-(4-hydroxy-3,5-dimethylphenyl)-propan (Tetramethylbiphenol A), 2,4-Bis-(4-hydroxyphenyl)-2-methylbutan, 1,1-Bis-(4-hydroxyphenyl)-cyclohexan, 4,4'-Dihydroxydiphenylsulfid, 4,4'-Dihydroxydiphenyl und 4,4'-Dihydroxydiphenylsulfon.

Besonders bevorzugt ist Bisphenol-A. Es können auch beliebige Mischungen der genannten Diphenole für die Herstellung der Polycarbonate verwendet werden.

Die Polycarbonate auf Basis der Diphenole der Formel (I) sind somit sowohl Homopolycarbonate als auch Copolycarbonate als auch Copolycarbonate, sie können sowohl linear als auch verzweigt sein.

Die Molekulargewichte $\overline{M}w$ (Gewichtsmittelmolekulargewicht, ermittelt nach der Gelpermeationschromatographie in Tetrahydrofuran) der Polycarbonate auf Basis der Diphenole der Formel (I) liegen zwischen 10.000 und 300.000, vorzugsweise zwischen 12.000 und 150.000 g/mol.

Andere Thermoplasten im Sinne dieser Erfindung sind auch aromatische Polyestercarbonate auf Basis von Diphenolen, Tere- und/oder Isophthalsäure, Phosgen, Kettenabbrechern und gegebenenfalls Verzweigern, welche relative Lösungsviskositäten von 1,18 bis 2,0, insbesondere von 1,2 bis 1,5 (gemessen in einer Lösung von 0,5 g Polyestercarbonat in 100 ml $CH_2Cl_2$-Lösung bei 25° C) haben und worin das Verhältnis von Carbonatstrukturen zu aromatischen Dicarbonsäure = Esterstrukturen vorzugsweise zwischen 10 Mol-% zu 90 Mol-% und 40 Mol-% zu 60 Mol-%, bezogen jeweils auf die Molsumme aus Carbonat- und Dicarbonsäureesterstrukturen, liegt.

Die aromatischen Polyestercarbonate und ihre Herstellung sind literaturbekannt (siehe beispielsweise EP-OS 00 36 080 (Le A 20 203-EP)). Bevorzugte Diphenole zu ihrer Herstellung sind die der Formel (I), worin R = H ist.

Andere Thermoplasten sind auch aliphatische thermoplastische Polyester, also vorzugsweise Polyalkylenglykolterephthalate. Polyalkylenterephthalate im Sinne der vorliegenden Erfindung sind beispielsweise solche auf Basis von Ethylenglykol, Propandiol-1,3, Butandiol-1,4, Hexandiol-1,6 und 1,4-Bis-hydroxymethylcyclohexan.

Die Molekulargewichte ( $\overline{M}_w$) dieser Polyalkylenglykolterephthalate liegen zwischen 10 000 und 80 000 g/mol. Die Polyalkylenglykolterephthalate können nach bekannten Verfahren beispielsweise aus Terephthalsäuredialkylester und dem entsprechenden Diol durch Umesterung erhalten werden (siehe z.B. US-Patente 2 647 885, 2 643 989, 2 534 028, 2 578 660, 2 742 494, 2 901 466).

Beispielsweise geht man von einem niederen Alkylester der Terephthalsäure, vorzugsweise dem Dimethylester, aus und estert diesen mit einem Überschuß an Diol in Gegenwart geeigneter Katalysatoren zum Bishydroxyalkylester der Terephthalsäure um. Dabei wird die Temperatur ausgehend von 140° C auf 210 bis 220° C erhöht. Der in Freiheit gesetzte Alkohol wird abdestilliert. Die Aufkondensation erfolgt anschließend bei Temperaturen von 210 bis 280° C, der Druck wird dabei stufenweise bis auf weniger als 1 Torr erniedrigt, wobei das überschüssige Diol abdestilliert wird.

Die erfindungsgemäß geeigneten, aliphatischen, thermoplastischen Polyester sind somit literaturbekannt oder nach literaturbekannten Verfahren erhältlich.

Erfindungsgemäß geeignete andere Thermoplasten sind auch thermoplastische Polyamide. Geeignete Polyamide sind beispielsweise Nylon-6,6, das durch Kondensation von Hexamethylendiamin und Adipinsäure hergestellt wurde; Nylon-6,10, hergestellt aus Hexamethylendiamin und Sebacinsäure; Polymere der $\epsilon$-Aminocapronsäure oder des $\epsilon$-Caprolactams, sogenanntes Nylon-6; Polyamid-11, das Eigenkondensationsprodukt der 11-Aminoundecansäure; Mischpolymerisate aus Hexamethylendiamin, ε-Caprolactam, Adipinsäure und Sebacinsäure; Mischpolymerisate aus Hexamethylendiamin und Adipinsäure, modifiziert mit Formaldehyd und Methanol; Polyamide, die durch Umsetzung eines linearen Diamins mit dimeren Säuren, welche aus Isobutylendimeren erhalten worden sind, hergestellt wurden, sowie Polyamide, die aus polymeren ungesättigten Fettsäuren und verschiedenen Polyaminen hergestellt wurden.

Alle erfindungsgemäß geeigneten Polyamide sollen die $-\underset{\underset{O}{\|}}{C}-NH-$Gruppierung

als Brückenglied in der Hauptkette enthalten und mittlere Molekulargewichte ( $\overline{M}w$, wird gelchromatographisch in m-Kresol bestimmt) zwischen 1000 und 100.000 g/mol haben (Literatur siehe z.B. US-Patent 3 431 224, Spalte 3, Zeilen 58-73).

Die erfindungsgemäß geeigneten, thermoplastischen Polyamide sind somit literaturbekannt oder nach literaturbekannten Verfahren erhältlich.

Erfindungsgemäß geeignete andere Thermoplasten sind auch sogenannte "LC-Polymere". Als LC-Polymere werden Polymere bezeichnet, die flüssigkristalline Schmelzen bilden können. Derartige Polymere, die auch als "thermotrop" bezeichnet werden, sind hinreichend bekannt (siehe beispielsweise EP-OS 0 131 846, EP-OS 0 132 637 und EP-OS 0 134 959). In den genannten Literaturstellen ist weitere Literatur angezogen und darüber hinaus die Ermittlung des flüssig-kristallinen Zustandes von Polymerschmelzen beschrieben.

"LC"-Polymere sind beispielsweise aromatische Polyester auf Basis von gegebenenfalls substituierter p-Hydroxybenzoesäure, gegebenenfalls substituierten Iso- und/oder Terephthalsäuren, 2,7-Dihydroxynathalin und anderen Diphenolen (EP-OS 0 131 846), aromatische Polyester auf Basis von gegebenenfalls substituierter p-Hydroxybenzoesäure, Diphenolen, Kohlensäure und gegebenenfalls aromatischen Dicarbonsäuren (EP-OS 0 132 637) und aromatischer Polyester auf Basis von gegebenenfalls substituierter p-Hydroxybenzoesäure, 3-Chlor-4-hydroxybenzoesäure, Isophthalsäure, Hydrochinon und 3,4′- und/oder 4,4′-Dihydroxydiphenyl, 3,4′- und/oder 4,4′-Dihydroxydiphenylether und/oder 3,4′- und/oder 4,4′-Dihydroxydiphenylsulfid (EP-OS 0 134 959).

Erfindungsgemäß geeignete andere Thermoplasten sind auch thermoplastische Poly-$C_1$-$C_4$-alkyl-methacrylate, also Polymere von

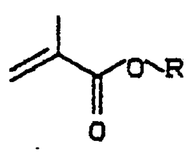 ,

worin R - $C_1$-$C_4$-Alkyl ist.

Geeignete Polymere sind solche des Methyl-, Ethyl-, Propyl- oder Butylmethacrylsäureesters, vorzugsweise des Methyl- oder Ethyl-methacrylsäureesters. Es sind sowohl Homopolymerisate als auch Copolymerisate dieser Methacrylsäureester darunter zu verstehen. Darüber hinaus können bis maximal 9,5 Gew.-% andere ethylenisch ungesättigte, copolymerisierbare Monomere, bezogen jeweils auf Gesamtgewicht an diesen ungesättigten Monomeren und den Methacrylsäureestern, copolymerisiert sein, so daß die erfindungsgemäß geeigneten $C_1$-$C_4$-Alkyl-methacrylatpolymeren aus 90,5 Gew.-% bis zu 100 Gew.-% an Alkylmethacrylat-Einheiten und aus 9,5 Gew.-% bis 0 Gew.-% an anderen ethylenisch ungesättigten Monomereinheiten aufgebaut sind.

Andere ethylenisch ungesättigte copolymerisierbare Monomere sind beispielsweise (Meth)Acrylnitril, (α-Methyl) Styrol, Bromstyrol, Vinylacetat, Acrylsäure-$C_1$-$C_8$-alkylester, (Meth)Acrylsäurearylester, (Meth)-Acrylsäure, Ethylen, Propylen, N-Vinylpyrrolidon, Vinylsulfonsäure(salze) oder Styrolsulfonsäure(salze).

Die erfindungsgemäßen geeigneten Polymethacrylate stellen in bestimmten organischen Lösungsmitteln lösliche Stoffe dar und besitzen somit einen linearen oder verzweigten Aufbau.

Die erfindungsgemäß geeigneten Polymethacrylate können nach bekannten Polymerisationsverfahren hergestellt werden, vorzugsweise aber durch radikalische oder thermische Polymerisation. Als Polymerisationsverfahren eignen sich Verfahren in Emulsion, Masse, Suspension, Dispersion, insbesondere die Emulsions-, vorzugsweise aber die Masse- bzw. Lösungspolymerisation. Die Molekulargewichte der Polymethacrylate können durch bekannte verfahrensbedingte Maßnahmen beispielsweise durch Verwendung von Mercaptanen als Regler in weiten Bereichen variiert werden. Üblicherweise besitzen die erfindungsgemäß geeigneten Polymethacrylate Molekulargewichte (bzw. Staudinger-Indices, bzw. Schmelzviskositäten), die deren thermoplastische Spritzguß- oder Extrusionsverarbeitung sinnvoll machen.

Die erfindungsgemäß geeigneten thermoplastischen Poly-$C_1$-$C_4$-alkyl-methacrylate sind somit literaturbekannt oder nach literaturbekannten Verfahren erhältlich.

Erfindungsgemäß geeignete andere Thermoplasten sind auch thermoplastische lineare oder verzweigte Polyarylensulfide. Sie haben Struktureinheiten der allgemeinen Formel

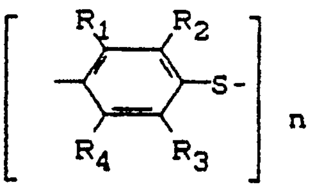

wobei $R_1$ bis $R_4$ unabhängig oder gleich sein können und $C_1$-$C_6$-Alkyl, Phenyl oder Wasserstoff sind. Weiterhin können die Polyarylensulfide auch Diphenyl-Einheiten enthalten.

Polyarylensulfide und ihre Herstellung sind bekannt (siehe beispielsweise US-PS 33 54 129 und EP-OS 0 171 021 sowie die in der EP-OS 0 171 021 angezogene Literatur).

Erfindungsgemäß geeignete andere Thermoplasten sind auch thermoplastische Polyarylensulfone.

Geeignete Polyarylensulfone im Sinne der Erfindung haben mittlere Gewichtsmittelmolekulargewichte $\overline{M}$ w (gemessen nach der Lichtstreumethode in $CHCl_3$) zwischen 1000 und 200 000 g/mol, vorzugsweise zwischen 20 000 und 60 000 g/mol. Beispiele dafür sind die nach bekannten Verfahren erhältlichen Polyarylensulfone aus 4,4′-Dichlordiphenylsulfon und einem Bisphenol, insbesondere 2,2-Bis-(4-hydroxyphenyl)-propan, mit mittleren Gewichtsmittelmolekulargewichten ( $\overline{M}$ w) von 2000 bis 200 000 g/mol.

Derartige Polyarylensulfone sind literaturbekannt (siehe beispielsweise US-PS 3 264 536, DE-AS 1 794 171, GB-PS 1 264 900, US-PS 3 641 207, EP-A-00 38 028, DE-OS 3 601 419 und DE-OS 3 601 420).

Die geeigneten Polyarylensulfone können auch in bekannter Weise verzweigt sein (siehe beispielsweise DE-OS 2 305 413).

Erfindungsgemäß geeignete andere Thermoplasten sind auch thermoplastische Poly-phenylenoxide, vorzugsweise Poly-(2,6-dialkyl-1,4-phenylenoxide). Erfindungsgemäß geeignete Polyphenylenoxide haben Gewichtsmittelmolekulargewichte $\overline{M}$ w (gemessen nach der Lichtstreumethode in Chloroform) zwischen 2000 und 100 000 g/mol, vorzugsweise zwischen 20 000 und 60 000 g/mol. Derartige Polyphenylenoxide sind literaturbekannt oder nach literaturbekannten Verfahren erhältlich.

Die Herstellung der bevorzugt verwendbaren Poly-(2,6-dialkyl-1,4-phenylenoxide) können nach bekannten Verfahren durch oxydierende Kondensation von 2,6-Dialkylphenolen mit Sauerstoff in Anwesenheit von Katalysatorkombinationen aus Kupfersalzen und tertiären Aminen erhalten werden (siehe beispielsweise DE-OS 2 126 434 und US-PS 3 306 875).

Geeignete Poly-(2,6-dialkyl-1,4-phenylenoxide) sind insbesondere die Poly-[2,6-di($C_1$-$C_4$-alkyl)-1,4-phenylenoxide] wie beispielsweise Poly-(2,6-dimethyl-1,4-phenylenoxid).

Geeignete 2,6-Dialkylphenole sind insbesondere solche mit $C_1$-$C_4$-Alkylsubstituenten wie z.B. 2,6-Dimethylphenol, 2-Methyl-6-ethylphenol, 2,6-Diethylphenol, 2-Ethyl-6-n-propylphenol, 2-Methyl-6-isopropylphenol, 2-Methyl-6-n-propylphenol, 2-Methyl-6-butylphenol und 2,6-Di-n-propylphenol.

Geeignete Katalysatorkombinationen sind insbesondere Kupfer(I)-chlorid und Triethylamin, Kupfer(I)-sulfat und Tributylamin, Kupfer(I)-acetat und N-Methylmorpholin und Kupfer(I)-chlorid und Pyridin.

Ein geeignetes Herstellungsverfahren für Poly-(2,6-dialkyl-1,4-phenylenoxide) ist beispielsweise unter Verwendung von Kupfer(I)-chlorid/Pyridin als Katalysatorkombination gemäß DE-OS 2 126 434 wie folgt: Ein 2,6-Dialkyl-phenol wird in einer Mischung aus n-Butanol/Toluol gelöst und in Anwesenheit des Kupfer(I)-chlorid/Pyridin-Komplexes unter Sauerstoffzufuhr oxidativ-dehydrierend kondensiert. Das ausgefallene Polyphenylenoxid wird anschließend aus Chloroform/Methanol umgefällt.

Erfindungsgemäß geeignete andere Thermoplasten sind auch thermoplastische Copolymerisate von Styrol und/oder α-Methylstyrol mit Acrylnitril und/oder mit Methacrylnitril, wobei im allgemeinen 50 bis 95 Gew.-Teile Styrol und/oder α-Methylstyrol und 50 bis 5 Gew.-Teile Acrylnitril und/oder Methacrylnitril, bezogen jeweils auf 100 Gew.-Teile Copolymerisat, in den thermoplastischen Copolymerisaten einpolymerisiert sind.

Bevorzugte Gewichtsverhältnisse im Copolymerisat sind 60 bis 80 Gew.-Teile Styrol und/oder α-Methylstyrol zu 40 bis 20 Gew.-Teilen Acrylnitril und/oder Methacrylnitril.

Derartige thermoplastische Copolymerisate sind bekannt und lassen sich durch radikalische Polymerisation, insbesondere durch Emulsions-, Suspensions-, Lösungs- oder Massepolymerisation herstellen. Die Copolymerisate besitzen vorzugsweise Molekulargewichte $\overline{M}$ w (Gewichtsmittel), ermittelt durch Lichtstreuung oder Sedimentation) zwischen 15 000 und 200 000 g/mol.

Die Herstellung von Folien aus den anderen Thermoplasten kann nach bekannten Verfahren erfolgen, beispielsweise durch Extrusion in bekannter Weise oder durch Vergießen von Lösungen dieser anderen Thermoplasten in üblichen Lösungsmitteln dieser Thermoplasten nach bekannten Verfahren.

Eine spezielle Möglichkeit der Herstellung der erfindungsgemäßen Verbundfolien ist auch die Coextrusion der thermoplastischen Homopolycarbonate mit den anderen Thermoplasten, so daß die erfindungsgemäßen Verbundfolien in einem Arbeitsgang erzeugt werden.

Gegenstand der vorliegenden Erfindung ist somit auch ein Verfahren zur Herstellung von Verbundfolien, bestehend aus obigen Komponenten a) und b) in den beanspruchten Gewichtsverhältnissen, das dadurch gekennzeichnet ist, daß man a) thermoplastische Homopolycarbonate aus 3,3′-Bis-(hydroxyphenyl)-ether zusammen mit b) anderen Thermoplasten als den thermoplastischen Homopolycarbonaten aus 3,3′-Bis-(hydroxyphenyl)-ether, im Gewichtsverhältnis von a) zu b) zwischen 5 Gew.-% zu 95 Gew.-% und 90 Gew.-%, zu 10 Gew.-%, vorzugsweise zwischen 15 Gew.-% zu 85 Gew.-% und 80 Gew.-% zu 20 Gew.-%, und insbesondere zwischen 25 Gew.-% zu 75 Gew.-% und 75 Gew.-% zu 25 Gew.-%, coextrudiert, und zwar bei Temperaturen zwischen 80 °C und 300 °C, vorzugsweise zwischen 90 °C und 290 °C, wobei die Coextrusionstemperatur so zu wählen ist, daß die anderen Thermoplasten b) nicht zu sehr erweichen. Bevorzugt führt man die Coextrusionstemperatur so, daß sich die Schmelzviskositäten der beiden Komponenten a) und b) um nicht mehr als 400 Pa.sec unterscheiden.

Die erfindungsgemäßen Folien aus den 3,3′-Bis-(hydroxyphenyl)-ether-Homopolycarbonaten und die erfindungsgemäßen Verbundfolien auf Basis dieser Folien aus den 3,3′-Bis-(hydroxyphenyl)-ether-Homopolycarbonaten können als homogene Membranen, Kompositionsmembranen oder asymmetrische Membranen verwendet werden.

Gegenstand der vorliegenden Erfindung ist somit auch die Verwendung der erfindungsgemäßen Folien, sowohl der Einzelfolien als auch der Verbundfolien, als homogene Membranen, Kompositionsmembranen oder asymetrische Membranen.

Die Folien, beziehungsweise Verbundfolien können flach, hohl, kugelförmig, schlauchförmig und hohlfaserförmig sein. Derartige Folien sind nach bekannten Verfahren durch Verformen, Tiefziehen, Blasen etc. erhältlich.

Die erfindungsgemäßen Folien, insbesondere die Verbundfolien, binden Verwendung beispielsweise für koch- und ofenfeste dichte Verpackungen oder für mikrowellenfeste Verpackungen, je nach dem, aus welcher Komponente b) die erfindungsgemäße Verbundfolie aufgebaut ist.

Die erfindungsgemäßen Einzelfolien aus den thermoplastischen 3,3′-Bis-(hydroxyphenyl)-ether-Homopolycarbonaten finden insbesondere Verwendung, wo hohe Barriereeigenschaften bei gleichzeitig guter Festigkeit gefordert sind. Man kann also die Einzelfolien für koch- und ofenfeste dichte Verpackungen verwenden, in der Verpackungsindustrie für die Umhüllung von Lebensmitteln verwenden, die Folien zur Abdeckung von Mikrowellengeschirr verwenden und auch Flüssigkeiten, in denen physikalisch eine größere Menge Sauerstoff, Kohlendioxid oder Stickstoff wünschenswerterweise gelöst ist, mit den Folien umhüllen und so die Permeation dieser Gase verhindern. Man kann auch Substanzen, an die möglichst wenig Sauerstoff oder Kohlendioxid kommen soll, mit den erfindungsgemäßen Folien umhüllen und so vor diesen Gasen schützen. Weiterhin finden die Einzelfolien Verwendung als Membranen und zur selektiven Gastrennung.

In den nachfolgenden Beispielen sind die relative Viskosität $\eta_{rel}$ in $CH_2Cl_2$ bei 25 °C in einer Konzentration von 0,5 g pro 100 ml $CH_2Cl_2$ gemessen; die Dichte wurde ebenfalls bei Raumtemperatur in g/cm$^3$ gemessen; die Zugfestigkeit wurde in MPa nach DIN 53 455 gemessen an einem S3-Zugstab bei Raumtemperatur und bei einer Abzugsgeschwindigkeit von 2 mm/min.

An den Folien werden die Permeationswerte für die folgenden Gase $O_2$, $N_2$, $CO_2$ und He gemessen, indem im Vakuum die Folien zuvor 48 h lang aufbewahrt werden, und erst nach Permeationsmeßdauer von weiteren 20 h aus dem zeitlichen Verlauf des jeweiligen Gasdurchsatzes in bekannter Weise die Permeabilität gemessen wird.

Die Bestimmung der Permeabilität erfolgt mit Druckmeßkondensatoren, die Maßeinheit ist

$$\frac{cm^3 \times mm}{m^2 \times 24h \times 10^5\ Pa.}$$

Die Meßtemperatur ist Raumtemperatur, die relative Luftfeuchtigkeit beträgt 0 %.

Beispiele

a) Herstellung eines Homopolycarbonats aus 3,3′-Bis-(hydroxyphenyl)-ether

In einem 6 1-Dreihalskolben, ausgerüstet mit KPG-Rührer und Rückflußkühler, werden 101 g 3,3′-Dihydroxydiphenylether in 1900 ml 6,5 %iger Natronlauge gelöst. Nach Zugabe von 1300 ml Methylenchlorid und 1.55 g Phenol (Kettenabbrecher) werden innerhalb einer halben Stunde 87 g Phosgen in die gut gerührte Emulsion eingeleitet. Danach werden 0,5 ml Triethylamin zur Emulsion gegeben. Nach weiteren 45 Minuten Nachrührzeit wird die organische von der wäßrigen Phase abgetrennt, zuerst mit verdünnter Phosphorsäure, anschließend mit Wasser mit zur Elektrolytfreiheit gewaschen. Das Polycarbonat wird daraufhin mit Isooctan aus der organischen Phase ausgefällt, abfiltriert und im Vakuum bei 60° C getrocknet. Ausbeute 95 g Polycarbonat mit relativer Viskosität von 1.195 bis 25 C in c = 0,5 g/100 ml Methylenchlorid. Die Dichte im Festkörper war 1.332 g/cm³.

b) Herstellung einer Folie aus dem Homopolycarbonat a)

Das Homopolycarbonat des Beispiels a) wurde bei 185° C nach fünfminütiger Temperung unter einem Druck von 200 bar fünf Minuten lang gepreßt. Man erhielt eine Pressplatte mit einer Dicke von 0,2580 mm, die optisch defektfrei war. Daran wurde mit Hilfe der Röntgenweitwinkel-Streuung und mit Hilfe der Differential-Scanning-Calorimetry überprüft, ob Kristallinität vorliegt. Die Platte bzw. Folie war im Rahmen der Nachweisbarkeit amorph. Sie hatte eine sehr glatte Oberfläche.

Es wurde die Permeabilät von $O_2$, $N_2$, $CO_2$ und He gemessen. Bei Raumtemperatur (23° C) bei einer 0 % relativen Feuchtigkeit wurden folgende Daten gemessen:

| | | (Einheiten: $\frac{cm^3 \times mm}{m^2 \times 24h \times 10^5\ Pa}$) |
|---|---|---|
| Permeabilität von | $O_2$ | 2.1 |
| | $CO_2$ | 5.6 |
| | $N_2$ | 0.2 |
| | He | 176.0 |

Von der Folie wurde weiterhin im langsamen Zugversuch an einem 2 mm breiten, 5 cm langen Streifen die Zugfestigkeit gemessen. Sie betrug 75 MPa.

c) Vergleichsbeispiele 1 bis 9

Gemäß Vorschrift für Beispiel a) wurden die Homopolycarbonate der nachfolgenden Beispiele c.1) bis c.9) aus den dort angegebenen Diphenolen hergestellt.

Aus diesen Polycarbonaten wurden Folien gemäß Vorschrift für Beispiel b) jeweils einer Dicke von etwa 0,25 mm hergestellt, dabei wurde die Preßtemperatur der jeweiligen Erweichungstemperatur der Polycarbonate angepaßt.

Die nachfolgende Tabelle enthält die ermittelten Meßdaten:

| Nr. | Formel Bisphenol | Eta-rel | Dichte | Festigkeit | Permeation |
|---|---|---|---|---|---|
| 1 | 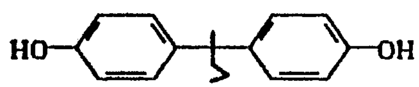 | 1.27 | 1.1318 | 42 | 122,1 |
| 2 | 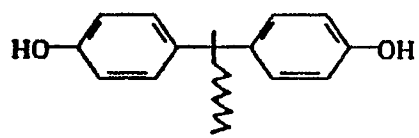 | 1.225 | 1.0897 | 29 | 101,0 |
| 3 | 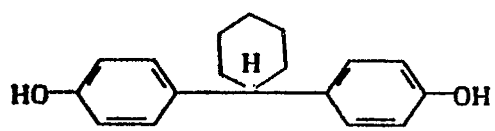 | 1.200 | 1.2051 | 60 | 22,0 |
| 4 | 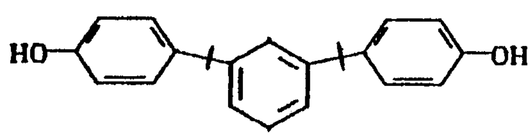 | 1.296 | 1.1500 | 55 | 20,0 |

| Nr. | Formel Bisphenol | Eta-rel | Dichte | Festigkeit | Permeation |
|---|---|---|---|---|---|
| 5 | 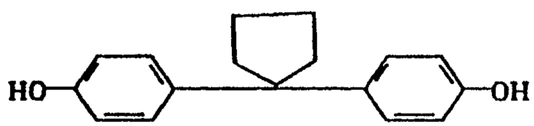 | 1.324 | 1.2240 | 55 | 136,0 |
| 6 | 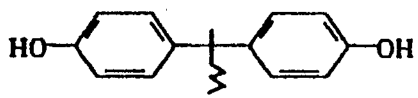 | 1.300 | 1.1635 | 49 | 327,0 |
| 7 | 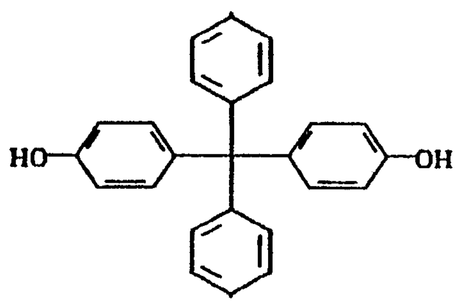 | 1.366 | 1.2147 | 75 | 26,8 |

| Nr. | Formel Bisphenol | Eta-rel | Dichte | Festigkeit | Permeation |
|---|---|---|---|---|---|
| 8 | 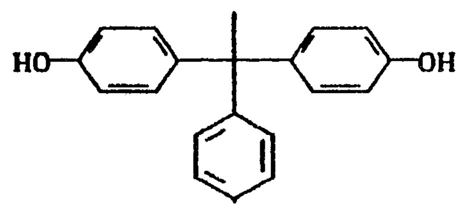 | 1.217 | 1.2107 | 63 | 64,8 |
| 9 | 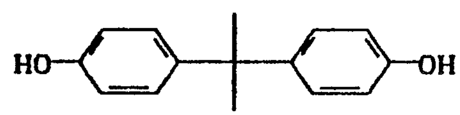 | 1.590 | 1.1973 | 55 | 73,2 |

d) Herstellung einer Verbundfolie

Eine Folie gemäß Beispiel b), jedoch nur mit einer Dicke von 0,1 mm, wurde mit einer Folie gemäß Beispiel C 9, jedoch nur mit einer Dicke von 0,1 mm verpreßt.

Anschließend wurden beide Folien 1 Minute lang bei 200 °C unter einem Druck von 100 bar miteinander verpreßt. Von der Verbundfolie wurde die Permeabilität bezüglich $O_2$ gemessen: Sie beträgt 5,0

$$\frac{cm^3 \times mm}{m^2 \times 24h \times 10^5\ Pa}.$$

Die Zugfestigkeit der Verbundfolie beträgt 65 MPa.

**Ansprüche**

1. Folien einer Dicke von 1 µ bis 500 µ aus thermoplastischen Homopolycarbonaten aus 3,3′-Dihydroxydiphenylether.

2. Folien gemäß Anspruch 1, dadurch gekennzeichnet, daß sie eine Dicke von 10 µ bis 250 µ haben.

3. Verfahren zur Herstellung der Folien der Ansprüche 1 und 2, dadurch gekennzeichnet, daß man das Homopolycarbonat aus 3,3′-Dihydroxydiphenylether bei Temperaturen zwischen 80 °C und 250 °C extrudiert und gegebenenfalls nach Abkühlung zwischen Raumtemperatur und 70 °C biaxial verstreckt, oder daß man oberhalb der Glastemperatur des Homopolycarbonats Granulatblöcke derselben durch Rakeln zu Folien tiefzieht, oder daß man konzentrierte Lösungen des 3,3′-Dihydroxydiphenylether-Homopolycarbonats in einem geeigneten Lösungsmittel auf ebene Oberflächen ausgießt und bei einer Temperaturführung der ebenen Oberflächen zwischen 30 °C und 70 °C das Lösungsmittel anschließend verdampft, oder daß man die konzentrierten Lösungen der Homopolycarbonate auf Flüssigkeiten aufbringt, welche eine höhere Dichte als die der konzentrierten Lösungen haben, nicht mit dem verwendeten Lösungsmittel verträglich sind und das Polycarbonat nicht lösen, und nach dem Spreiten die Folien durch Verdampfen des für das Polycarbonat verwendeten Lösungsmittels und gegebenenfalls auch der Flüssigkeit mit höherer Dichte gewinnt.

4. Verbundfolien, bestehend aus

a) Folien aus thermoplastischen Homopolycarbonaten aus 3,3′-Bis-(hydroxyphenyl)-ether und

b) Folien aus anderen Thermoplasten als den thermoplastischen Homopolycarbonaten gemäß Komponente a), dadurch gekennzeichnet, daß das Gewichtsverhältnis der Komponenten a) zu b) zwischen 5 Gew.-% zu 95 Gew.-% und 90 Gew.-% zu 10 Gew.-%, liegt.

5. Verbundfolien gemäß Anspruch 4, dadurch gekennzeichnet, daß das Gewichtsverhältnis der Komponenten a) und b) zwischen 15 Gew.-% zu 85 Gew.-% und 80 Gew.-% zu 20 Gew.-% liegt.

6. Verbundfolien gemäß Anspruch 5, dadurch gekennzeichnet, daß das Gewichtsverhältnis der Komponenten a) zu b) zwischen 25 Gew.-% zu 75 Gew.-% und 75 Gew.-% zu 25 Gew.-% liegt.

7. Verfahren zur Herstellung der Verbundfolien der Ansprüche 4 bis 6, dadurch gekennzeichnet, daß man 3,3′-Dihydroxydiphenylether-Homopolycarbonat-Folien gemäß Komponente a) des Anspruchs 4, bei Temperaturen zwischen 70 °C und 200 °C mit Folien gemäß Komponente b) des Anspruchs 4 zusammenbringt und dann unter einem Druck zwischen 2 bar und 500 bar verpreßt.

8. Verfahren zur Herstellung der Verbundfolien der Ansprüche 4 bis 6, dadurch gekennzeichnet, daß man

a) thermoplastische Homopolycarbonate aus 3,3′-Bis-(hydroxyphenyl)-ether zusammen mit

b) anderen Thermoplasten als den thermoplastischen Homopolycarbonaten aus 3,3′-Bis-(hydroxyphenyl)-ether im Gewichtsverhältnis von a) zu b) zwischen 5 Gew.-% zu 95 Gew.-% und 90 Gew.-% zu 10 Gew.-% coextrudiert und zwar bei Temperaturen zwischen 80 °C und 300 °C, wobei die Coextrusionstemperatur so zu wählen ist, daß die anderen Thermoplasten b) nicht zu sehr erweichen.

9. Verfahren gemäß Anspruch 8, dadurch gekennzeichnet, daß man die Coextrusionstemperatur so führt, daß sich die Schmelzviskositäten der beiden Komponenten a) und b) um nicht mehr als 400 Pa.sec unterscheiden.

10. Verwendung der Folien der Ansprüche 1 und 2 und der Verbundfolien der Ansprüche 4, 5 und 6 als

homogene Membranen, Kompositionsmembranen oder asymmetrische Membranen.